# EUROPÄISCHE PATENTSCHRIFT

(11) **EP 0 675 169 B1**
(45) Veröffentlichungstag und Bekanntmachung des Hinweises auf die Patenterteilung: **16.09.1998**
(21) Anmeldenummer: 95103945.2
(22) Anmeldetag: 17.03.1995
(51) Int. Cl.: C09B 44/10, D06P 3/76, D21H 21/28, G02B 5/30

(54) **Kationische Thiadiazolfarbstoffe**
Cationic thiadiazole dyes
Colorants thiadiazoles cationiques

(30) Priorität: 30.03.1994 DE 4411065
(43) Veröffentlichungstag der Anmeldung: 04.10.1995
(73) Patentinhaber: BAYER AG, 51368 Leverkusen (DE)
(72) Erfinder: Berneth, Horst, Dr., D-51373 Leverkusen (DE); Claussen, Uwe, Dr., D-51379 Leverkusen (DE); Hartwich, Werner ., D-50767 Köln (DE); Wild, Peter, Dr., D-51519 Odenthal (DE)

(56) Entgegenhaltungen:
- EP-A- 0 495 250
- EP-A- 0 579 011

## Beschreibung

Es sind schon kationische 1,3,4-Thiadiazolfarbstoffe mit einer Thiadiazolgruppe pro Molekül bekannt (siehe z.B. DE-A 4 222 257). Die bekannten 1,3,4-Thiadiazolfarbstoffe haben jedoch andere Eigenschaften als die erfindungsgemäßen, die zwei Thiadiazolgruppen pro Molekül aufweisen.

Die vorliegende Erfindung betrifft kationische 1,3,4-Thiadiazolfarbstoffe der Formel (I) 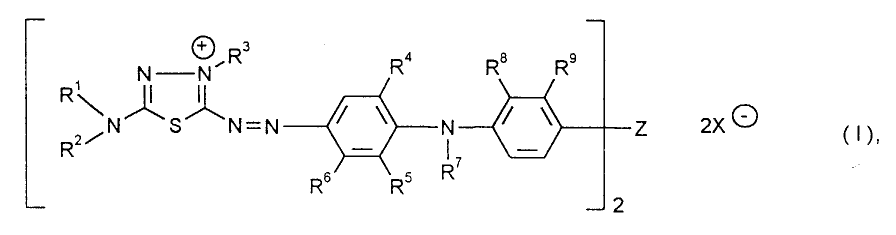 in der
- R¹ und R²: unabhängig voneinander für Wasserstoff, Alkyl, Alkenyl, Cycloalkyl, Aralkyl, Aryl oder einen gegebenenfalls über eine Methylen-oder Ethylenbrücke gebundenen Heterocyclus stehen,
wobei
R¹ und R² gemeinsam mit dem dazwischenliegenden Stickstoffatom auch einen Heterocyclus bilden können,
- R³: für Alkyl, Alkenyl, Cycloalkyl oder Aralkyl steht,
- R⁴ und R⁵: unabhängig voneinander für Wasserstoff, Alkyl, Alkoxy oder Halogen stehen,
- R⁶: für Wasserstoff, Alkyl, Alkoxy, Aryloxy, Arylamino, Alkanoylamino, Aroylamino, Alkansulfonamino, Alkoxycarbonylamino, Alkylaminocarbonylamino, Halogen, Cyano, Alkoxycarbonyl oder Nitro steht
oder
- R⁵ und R⁶: eine -CH=CH-CH=CH-Brücke bilden,
- R⁷: für Wasserstoff, Alkyl, Cycloalkyl, Alkenyl, Aralkyl oder Aryl steht,
- R⁸ und R⁹: unabhängig voneinander für Wasserstoff, Alkyl, Alkoxy oder Halogen stehen,
- Z: ein bivalentes Brückenglied und
- X^{⊖}: ein Anion bedeutet,
wobei alle genannten Alkyl-, Alkenyl-, Cycloalkyl-, Aralkyl-, Aryl-, Alkoxy- und heterocyclischen Reste gegebenenfalls mit nichtionogenen Substituenten, Carboxylgruppen, Ammoniumgruppen und/oder Pyridiniumgruppen substituiert sein können.

Vorzugsweise ist wenigstens einer der Reste R⁴, R⁵, R⁶, R⁸ und R⁹ verschieden von Wasserstoff oder R⁵ und R⁶ bilden gemeinsam eine -CH=CH-CH=CH-Brücke.

Nichtionogene Substituenten sind beispielsweise die in der Farbstoffchemie üblichen, nicht dissoziierenden Substituenten, wie Cyano, Hydroxy, Fluor, Chlor, Brom, Nitro, Alkyl, Monoalkylamino, Dialkylamino, Alkoxy, Phenyl, Acyloxy, Acylamino, Alkoxycarbonyl und Alkoxycarbonyloxy.

Alkylreste, auch solche in Alkoxy- und Aralkylresten, sind beispielsweise solche mit 1 bis 8, vorzugsweise 1 bis 4 C-Atomen. Sie können auch verzweigt sein.

Alkenylreste sind beispielsweise solche mit 2 bis 6, vorzugsweise 2 bis 3 C-Atomen.

Cycloalkylreste sind beispielsweise solche mit 4 bis 7, vorzugsweise 5 bis 6 C-Atomen.

Halogen steht vorzugsweise für Fluor, Chlor oder Brom.

Arylreste, auch solche in Aralkylresten, sind vorzugsweise Phenylreste, die gegebenenfalls durch 1 bis 3 nichtionogene Substituenten und/oder eine Carboxylgruppe substituiert sein können.

Heterocyclische Reste sind beispielsweise Thienyl, Furyl und Pyridyl, sowie ihre teilweise oder vollständig hydrierten Derivate. Sie können gegebenenfalls 1 bis 3 nichtionogene Substituenten enthalten.

Als Anionen X^{⊖} sind farblose, organische und anorganische Anionen bevorzugt, beispielsweise Fluorid, Chlorid, Bromid, Iodid, Perchlorat, Tetrafluoroborat, Hydroxid, Hydrogensulfat, Sulfat, Dihydrogenphosphat, Hydrogenphosphat, Phosphat, Hydrogencarbonat, Carbonat, Methylsulfat, Ethylsulfat, Cyanat, Thiocyanat, Tri- und Tetrachlorozinkat, Tetrachloroferrat und Anionen gesättigter oder ungesättigter aliphatischer, cycloaliphatischer, aromatischer oder heterocyclischer Carbon- und Sulfonsäuren wie Formiat, Acetat, Hydroxyacetat, Cyanacetat, Propionat, Hydroxypropionat, Oxalat, Citrat, Lactat, Tartrat, das Anion der Cyclohexancarbonsäure, Phenylacetat, Benzoat, das Anion der Nikotinsäure, Methansulfonat, Ethansulfonat, Benzolsulfonat, Chlorbenzol sulfonat, Toluolsulfonat und Hexafluorosilikat.

Wenn es sich um mehrwertige Anionen handelt, z.B. um Sulfat oder Oxalat, dann steht in Formel (I) X^{⊖} für ein Äquivalent solch eines mehrwertigen Anions.

Bevorzugt sind kationische 1,3,4-Thiadiazolfarbstoffe der Formel (I), in der
- R¹ und R²: unabhängig voneinander je für C₁-C₈-Alkyl, das gegebenenfalls durch Hydroxy, Halogen, Cyano, C₁-C₄-Alkoxy, Aminocarbonyl und/oder C₁-C₄-Alkoxycarbonyl substituiert ist, für Allyl, Cyclopentyl, Cyclohexyl, einen gegebenenfalls durch Halogen, Cyano, C₁-C₄-Alkyl, C₁-C₄-Alkoxy und/oder C₁-C₄-Alkanoylamino substituierten Benzyl-, Phenethyl- oder Phenylrest, für Tetramethylensulfonyl, Tetrahydrofurylmethyl, Pyridylmethyl oder Pyridylethyl stehen, wobei R² auch für Wasserstoff stehen kann,
oder
- R¹ und R²: gemeinsam mit dem dazwischenliegenden Stickstoffatom für einen gegebenenfalls durch bis zu 4 Methylgruppen substituierten Pyrrolidino-, Piperidino-, Morpholino- oder gegebenenfalls am Stickstoff durch Methyl, Ethyl, Hydroxyethyl oder Aminoethyl substituierten Piperazinorest stehen,
- R³: für C₁-C₄-Alkyl, das gegebenenfalls durch Hydroxy, Halogen, Cyano, C₁-C₄-Alkoxy, Aminocarbonyl und/oder C₁-C₄-Alkoxycarbonyl substituiert ist, für Allyl oder einen gegebenenfalls durch Halogen, C₁-C₄-Alkyl und/oder C₁-C₄-Alkoxy substituierten Benzyl-oder Phenethylrest steht,
- R⁴ und R⁵: unabhängig voneinander für Wasserstoff, C₁-C₄-Alkyl, C₁-C₄-Alkoxy oder Halogen stehen,
- R⁶: für Wasserstoff, C₁-C₄-Alkyl, C₁-C₄-Alkoxy, C₆-C₁₀-Aryloxy, C₆-C₁₀-Arylamino, C₁-C₄-Alkanoylamino, C₆-C₁₀-Aroylamino, C₁-C₄-Alkansulfonylamino, C₁-C₄-Alkoxycarbonylamino, C₁-C₄-Alkylaminocarbonylamino, Halogen, Cyano, C₁-C₄-Alkoxycarbonyl oder Nitro steht,
oder
- R⁵ und R⁶: eine -CH=CH-CH=CH-Brücke bilden,
- R⁷: für Wasserstoff, C₁-C₄-Alkyl, das gegebenenfalls durch Hydroxy, Halogen, Cyano, C₁-C₄-Alkoxy, Aminocarbonyl und/oder C₁-C₄-Alkoxycarbonyl, substituiert ist, Allyl, Cyclopentyl, Cyclohexyl oder einen gegebenenfalls durch Halogen, C₁-C₄-Alkyl und/oder C₁-C₄-Alkoxy substituierten Benzyl-, Phenethyl- oder Phenylrest steht,
- R⁸ und R⁹: unabhängig voneinander für Wasserstoff, C₁-C₄-Alkyl, C₁-C₄-Alkoxy oder Halogen stehen,
- Z: für -(CH₂)ₙ-, -C(CH₃)₂-, Sauerstoff, Schwefel, NR¹⁰, SO₂, -O-(CH₂)ₙ₁-O-, -OCO-, -OCOO-, -NHCO-, -NHCONH-, -NHCOCONH-, -NHCOCH=CHCONH-, -NHSO₂-, -NHSO₂NH-, -CONHCO-, -CONHNHCO- oder eine Gruppe der Formeln (II) oder (III) steht 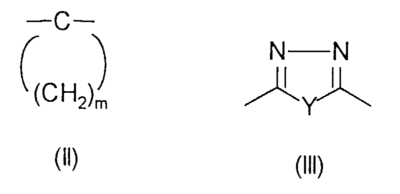
in denen
- n und n₁: 1, 2, 3 oder 4,
- m: 4, 5 oder 6,
- R¹⁰: Wasserstoff oder C₁-C₄-Alkyl und
- Y: Sauerstoff, Schwefel oder NH bedeuten und
- X^{⊖}: ein Anion bedeutet.

Weitere bevorzugte 1,3,4-Thiadiazolfarbstoffe der Formel (I) sind solche, bei denen
- R¹ und R²: unabhängig voneinander für Methyl, Ethyl, Propyl, Butyl, Methylpropyl, Pentyl, Methylbutyl, Dimethylpropyl, Hexyl, Hydroxyethyl, Hydroxypropyl, Chlorethyl, Cyanomethyl, Cyanoethyl, Cyanopropyl, Methoxyethyl, Ethoxyethyl, Methoxypropyl, Aminocarbonylmethyl, Aminocarbonylethyl, Methoxycarbonylmethyl, Methoxycarbonylethyl, Allyl, Cyclohexyl, Benzyl, Phenethyl, Methylbenzyl, Chlorbenzyl, Methoxybenzyl, Phenyl, Chlorphenyl, Methylphenyl, Methoxyphenyl, Ethoxyphenyl, Acetaminophenyl, Cyanophenyl, Tetramethylensulfon-3-yl, Furfuryl, 2- oder 4-Pyridylmethyl oder 2- oder 4-Pyridylethyl stehen und R² auch Wasserstoff bedeuten kann
oder
- R¹ und R²: gemeinsam mit dem dazwischenliegenden Stickstoffatom für Pyrrolidino, Piperidino, Morpholino, Piperazino, Methylpiperazino, Ethylpiperazino, Hydroxyethylpiperazino oder Aminoethylpiperazino stehen,
- R³: für Methyl, Ethyl, Propyl, Butyl, Hydroxyethyl, Hydroxypropyl, Hydroxybutyl, Chlorethyl, Cyanomethyl, Cyanoethyl, Cyanopropyl, Methylethyl, Ethoxyethyl, Methoxypropyl, Aminocarbonylethyl, Methoxycarbonylethyl, Ethoxycarbonylethyl, Allyl, Benzyl, Phenethyl, Methylbenzyl, Chlorbenzyl oder Methoxybenzyl steht,
- R⁴ und R⁵: unabhängig voneinander für Wasserstoff, Methyl, Ethyl, Methoxy, Ethoxy oder Chlor stehen,
- R⁶: für Wasserstoff, Methyl, Ethyl, Methoxy, Ethoxy, Phenoxy, Anilino, Formylamino, Acetylamino, Propionylamino, Trifluoracetylamino, Benzoylamino, Methansulfonylamino, Ethansulfonylamino, Methoxycarbonylamino, Ethoxycarbonylamino, Methylaminocarbonylamino, Ethylaminocarbonylamino, Propylaminocarbonylamino, Butylaminocarbonylamino, Fluor, Chlor, Brom, Cyano, Methoxycarbonyl, Ethoxycarbonyl oder Nitro steht
oder
- R⁵ und R⁶: eine -CH=CH-CH=CH-Brücke bilden,
- R⁷: für Wasserstoff, Methyl, Ethyl, Propyl, Butyl, Hydroxyethyl, Hydroxypropyl, Chlorethyl, Cyanomethyl, Cyanoethyl, Cyanopropyl, Methoxyethyl, Ethoxyethyl, Aminocarbonylethyl, Methoxycarbonylethyl, Ethoxycarbonylethyl, Allyl, Benzyl, Phenethyl, Methylbenzyl, Phenyl, Chlorphenyl, Methylphenyl oder Methoxyphenyl steht,
- R⁸ und R⁹: unabhängig voneinander für Wasserstoff, Methyl, Methoxy oder Chlor stehen,
- Z: für -CH₂-, -CH₂CH₂-, -C(CH₃)₂-, Sauerstoff, NH, SO₂, -O(CH₂)₂-O-, -NHCO-, -NHCONH-, -NHCOCH=CHCONH-,-NHSO₂-, -CONHNHCO- oder die Gruppe der Formel (II) mit m = 5 oder die Gruppe der Formel (III) mit Y = Sauerstoff steht und
- X⁻: ein Anion bedeutet.

Besonders bevorzugt sind kationische 1,3,4-Thiadiazolfarbstoffe der Formel (I), in denen
- R¹ und R²: unabhängig voneinander für Methyl, Ethyl, Propyl, Butyl, Hydroxyethyl, Hydroxypropyl, Cyanoethyl, Methoxyethyl, Ethoxyethyl, Methoxyphenyl oder Acetaminophenyl stehen und R² auch Wasserstoff bedeuten kann
oder
- R¹ und R²: gemeinsam mit dem dazwischenliegenden Stickstoffatom für Morpholino stehen,
- R³: für Methyl, Ethyl, Hydroxyethyl, Hydroxypropyl, Cyanoethyl oder Aminocarbonylethyl steht,
- R⁴: für Methyl, Methoxy, Ethoxy oder Chlor steht,
- R⁵, R⁸ und R⁹: für Wasserstoff stehen,
- R⁶: für Wasserstoff, Methyl, Methoxy, Formylamino, Acetylamino, Chlor oder Cyano steht,
- R⁷: für Wasserstoff, Methyl, Hydroxyethyl, Hydroxypropyl oder Cyanoethyl steht,
- Z: für NH, SO₂, -NHCO-, -NHCONH- oder die Gruppe der Formel (III) mit Y = Sauerstoff steht und
- X⁻: ein Anion bedeutet.

Ganz besonders bevorzugt sind kationische 1,3,4-Thiadiazolfarbstoffe der Formel (I), bei denen
- R⁷: für Wasserstoff steht und
alle anderen Reste die unmittelbar zuvor angegebene Bedeutung haben.

Die vorliegende Erfindung betrifft weiterhin Anhydrobasen der Formel (IV) 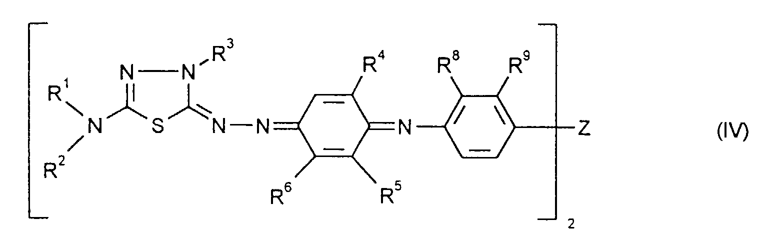 in der R¹ bis R⁶, R⁸, R⁹ und Z die bei Formel (I) angegebene breiteste Bedeutung haben.

Die Anhydrobasen der Formel (IV) können aus den Farbstoffen der Formel (I) durch Umsetzung mit Basen in Gegenwart eines Lösungsmittels erhalten werden.

Hierfür geeignete Basen sind beispielsweise Hydroxide wie Natrium-, Kalium- und Calciumhydroxid, Oxide wie Magnesiumoxid, Alkoholate wie Natriummethylat, -ethylat und -tert.-butylat, Amine wie Triethylamin, Di- oder Triethanolamin, Piperidin oder Pyridin oder basische Ionenaustauscher auf der Basis Styrol/Divinylbenzol.

Geeignete Lösungsmittel sind beispielsweise Wasser, Alkohole wie Methanol, Ethanol, Isopropanol oder Glykole, Ketone wie Aceton oder Butanon, Ester und Lactone wie Essigsäureethylester oder γ-Butyrolacton, Ether wie Methyl-tert.-butylether, Amide wie Dimethylformamid, Dimethylacetamid, N-Methyl-pyrrolidon oder N-Methylcaprolactam, Nitrile wie Acetonitril und 3-Hydroxypropionitril, Sulfoxide wie Dimethyl-sulfoxid, Sulfone wie Sulfolan und Dimethylsulfon oder Mischungen davon.

Die Anhydrobasen der Formel (IV) sind geeignete Zwischenprodukte zur Herstellung von Farbstoffen der Formel (I), in der R⁷ Wasserstoff bedeutet, mit solchen Anionen X^{⊖}, die durch eines der nachfolgend beschriebenen Herstellungsverfahren für Farbstoffe der Formel (I) nicht oder nur mit großem Aufwand eingeführt werden können. Man kann so Farbstoffe der Formel (I) herstellen, die durch Variation des Anions X^{⊖} besondere Eigenschaften erhalten, z.B. bessere Löslichkeit und/oder bessere Eignung zur Herstellung von flüssigen Formulierungen. Hierzu können Anhydrobasen der Formel (IV) mit der Säure der Formel HX umgesetzt werden, deren Anion eingeführt werden soll. Die Umsetzung kann gegebenenfalls in Gegenwart eines Lösungsmittels und unter Kühlung, bei Raumtemperatur oder Temperaturen bis zum Siedepunkt des Mediums durchgeführt werden.

Lösungsmittel für diese Reaktion können beispielsweise sein ein Überschuß der Säure HX, Wasser, Glykole wie Ethylen- oder Propylenglykol, Amide wie ε-Caprolactam, Nitrile wie Oxypropionitril, die oben für die Herstellung der Anhydrobasen aufgeführten Lösungsmittel oder Mischungen davon.

So hergestellte Farbstoffe der Formel (I) fallen entweder aus dem Reaktionsgemisch aus oder ergeben darin eine stabile Lösung.

Die vorliegende Erfindung betrifft auch ein Verfahren zur Herstellung von kationischen 1,3,4-Thiadiazolfarbstoffen der Formel (I), das dadurch gekennzeichnet ist, daß man 2-Amino-1,3,4-thiadiazole der Formel (V) 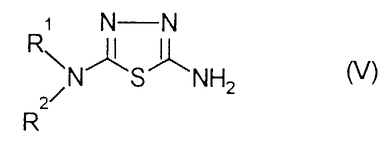 in der
- R¹ und R²: die bei Formel (I) angegebene breiteste Bedeutung haben,
auf Diphenylaminderivate der Formel (VI) kuppelt 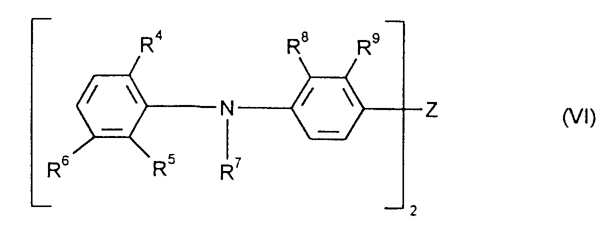 in der
- R⁴ bis R⁹ und Z: die bei Formel (I) angegebene breiteste Bedeutung haben,
und dann mit Verbindungen der Formel (VII) quarternisiert

R³X (VII),

in der
- R³: die bei Formel (I) angegebene breiteste Bedeutung hat und
- X: für eine Gruppe steht, die dem ungeladenen Anion X^{⊖} entspricht wie es bei Formel (I) angegeben ist.

Die 2-Amino-1,3,4-thiadiazole der Formel (V) sind z.B. aus der DE-A 2 811 258 bekannt oder analog dazu erhältlich. Die Diphenylaminderivate der Formel (VI) sind z.B. aus Houben-Weyl, Methoden der organischen Chemie, Band XI/1, S. 63 ff. bekannt oder analog dazu erhältlich.

Ein weiteres Verfahren zur Herstellung von kationischen 1,3,4-Thiadiazolfarbstoffen der Formel (I) ist dadurch gekennzeichnet, daß man Farbstoffe der Formel (VIII) 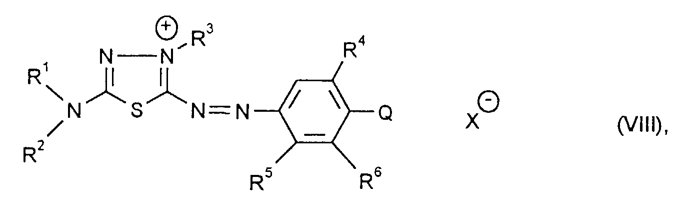 in der
- R¹ bis R⁶ und X: die bei Formel (I) angegebene breiteste Bedeutung haben und
- Q: für Halogen, Hydroxy, Alkoxy, Cycloalkoxy, Aryloxy, Amino, Mono- oder Dialkylamino, Acyloxy oder Acylamino steht,
mit Aminen der Formel (IX) umsetzt 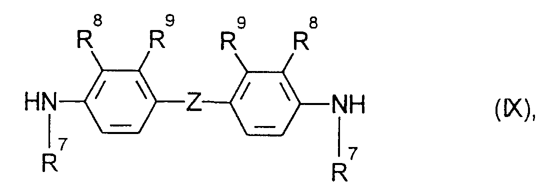 in der
- R⁷ bis R⁹ und Z: die bei Formel (I) angegebene breiteste Bedeutung haben.

In der Formel (VIII) steht Q vorzugsweise für Fluor, Chlor, Brom, Hydroxy, C₁-C₄-Alkoxy, C₅-C₇-Cycloalkoxy, C₆-C₁₀-Aryloxy, NR'R", wobei R' und R" unabhängig voneinander für Wasserstoff oder C₁-C₆-Alkyl stehen, C₁-C₆-Alkanoyloxy, C₆-C₁₀-Aroyloxy, C₁-C₆-Alkansulfonyloxy, C₆-C₁₀-Arylsulfonyloxy, C₁-C₆-Alkanoylamino, C₆-C₁₀-Aroylamino, C₁-C₆-Alkylsulfonylamino oder C₆-C₁₀-Aryl-sulfonylamino.

Verbindungen der Formel (VIII) können beispielsweise erhalten werden, indem man 2-Amino-1,3,4-thiadiazole der Formel (V) diazotiert und auf ein Benzol-derivat der Formel (X) kuppelt 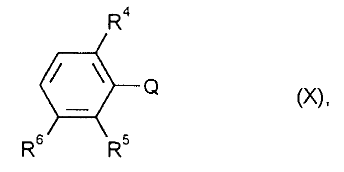 in der
- R⁴ bis R⁶: die bei Formel (I) angegebene breiteste Bedeutung haben und
- Q: die bei Formel (VIII) angegebene breiteste Bedeutung hat,
und gegebenenfalls, wenn Q für Hydroxy oder Amino steht, mit C₁-C₆-aliphatischen oder C₆-C₁₀-aromatischen Carbonsäureanhydriden oder -chloriden oder Sulfonsäurechloriden acyliert,
und dann mit Verbindungen der Formel (VII) quaterniert.

Die erwähnten Diazotierungen können in an sich bekannter Weise durchgeführt werden, beispielsweise mit Nitrosylschwefelsäure in 80 bis 90 Gew.-%iger Phosphorsäure oder in Gemischen solcher Phosphorsäuren mit Essigsäure, Propionsäure und/oder Schwefelsäure oder mit Natriumnitrit in wäßriger Mineralsäure, z.B. Salzsäure.

Die erwähnten Kupplungen können ebenfalls auf an sich bekannte Weise durchgeführt werden, beispielsweise in einem sauren Medium, das wäßrig oder wäßrigorganisch sein kann.

Die Diazotierungen und Kupplungen können auch nach anderen an sich bekannten Verfahren simultan durchgeführt werden, beispielsweise indem man Verbindungen der Formel (V) und Verbindungen der Formel (VI) bzw. (X) gemeinsam in einem sauren Medium mit beispielsweise Natriumnitrit umsetzt. Als saure Medien sind z.B. wäßrige Mineralsäuren oder organische Säuren und Mischungen davon geeignet, wobei als Mineralsäuren z.B. Salzsäure, Schwefelsäure oder Phosphorsäure und als organische Säuren z.B. Ameisensäure, Essigsäure oder Propionsäure in Frage kommen. Auch unter Druck verflüssigtes Kohlendioxid kann als saures Medium dienen.

Als quaternierende Mittel kommen solche der Formel (VII) infrage und solche, die unter Reaktionsbedingungen formal Verbindungen der Formel (VII) ergeben. Beispiele sind Alkylhalogenide, Halogenacetamide, β-Halogenpropionitrile, Halogenhydrine, Alkylenoxide, Alkylester der Schwefelsäure, Alkylester organischer Sulfonsäuren, Nitrile, Amide und Ester von α,β-ungesättigten Carbonsäuren, Alkoxyalkylhalogenide und Vinylpyridine. Als Einzelbeispiele seien genannt: Methylchlorid, Methylbromid, Methyliodid, Benzylchlorid, Benzylbromid, Chloracetamid, β-Chlorpropionitril, Ethylenchlorhydrin, Dimethylsulfat, Diethylsulfat, Benzolsulfonsäuremethylester, Benzolsulfonsäureethylester, Benzolsulfonsäurebenzylester, Toluolsulfonsäuremethylester, Toluolsulfonsäureethylester, Toluolsulfonsäurepropylester, Allylchlorid, Allylbromid, Ethylenoxid, Propylenoxid, Acrylnitril, Acrylsäure, Acrylamid, Acrylsäuremethylester, 2- und 4-Vinylpyridin, Sulfolen (= 1,1-Dioxo-2,5-dihydrothiophen), Epichlorhydrin, Styroloxid, Methylphosphonsäuredimethylester und Allylphosphorsäureester.

Die erwähnten Quaternierungen können z.B. in einem indifferenten organischen Lösungsmittel, in Wasser oder in Mischungen davon erfolgen, wobei gegebenenfalls säurebindende Mittel, wie Magnesiumoxid, Natriumcarbonat, Natriumhydrogencarbonat, Calciumcarbonat oder Natriumacetat, zugesetzt werden können. Geeignete organische Lösungsmittel sind beispielsweise Kohlenwasserstoffe, Chlorkohlenwasserstoffe, Nitrokohlenwasserstoffe, Nitrile, Ester, Ether, Amide, Carbonsäuren, Carbonsäureanhydride, Ketone und Dialkylsulfoxide, wie Benzol, Toluol, Tetrachlorethan, Mono- und Dichlorbenzol, Nitrobenzol, Acetonitril, Propionitril, Essigsäureethylester, γ-Butyrolacton, Methyl-tert.-butylether, Dimethylformamid, N-Methylpyrrolidon, Essigsäure, Propionsäure, Milchsäure, Acetanhydrid, Aceton, Butanon und Dimethylsulfoxid. Die Umsetzung der Farbstoffe der Formel (VIII) mit Aminen der Formel (IX) kann ebenfalls in organischen Lösungsmitteln, in Wasser oder in Mischungen davon erfolgen. Geeignete Lösungsmittel sind die oben beschriebenen. Die Umsetzung kann bei Temperaturen z.B. zwischen 0 und 100°C, vorzugsweise solchen zwischen 10 und 50°C durchgeführt werden.

Die entstehenden Farbstoffe der Formel (I) fallen entweder aus den Lösungsmitteln direkt aus und können z.B. durch Abfiltrieren isoliert werden oder man kann sie bei der Verwendung von mit Wasser mischbaren Lösungsmitteln als feste, abfiltrierbare Produkte erhalten durch Verdünnen mit Wasser und Zugabe wasserlöslicher Salze wie Natrium- oder Kaliumchlorid, gegebenenfalls in Gegenwart von Zinkchlorid.

Wenn im vorstehenden bei der Erläuterung von in den Formeln enthaltenen Symbolen auf "die bei der Formel (I) angegebene breiteste Bedeutung" bezug genommen wird, so handelt es sich um die allgemeine Bedeutung des jeweiligen Symbols. Die bevorzugten, besonders bevorzugten und ganz besonders bevorzugten Bedeutungen des jeweiligen Symbols sind dann ebenso wie bei der Formel (I) angegeben.

Die erfindungsgemäßen Farbstoffe der Formel (I) eignen sich hervorragend zum Färben und Bedrucken von kationisch färbbaren Fasern und Geweben, vorzugsweise von Papier und zum Spinnfärben von Polymerisaten und Mischpolymerisaten des Acrylnitrils und Dicyanoethylens, wobei echte Farbtöne erzielt werden. Die Farbstoffe können auch Verwendung finden zum Färben und Bedrucken von tannierten Cellulosematerialien, Seide und Leder. Sie sind weiter geeignet zur Herstellung von Schreibflüssigkeiten, Stempelflüssigkeiten, Kugelschreiberpasten und ink-jet-Tinten und lassen sich auch im Gummidruck verwenden.

Das Färben von Papier erfolgt beispielsweise in der wäßrigen Aufschlämmung von Cellulosefasern vor und während des Auflaufs auf die Papiermaschine unter sauren bis neutralen Bedingungen in Gegenwart oder Abwesenheit von organischen und/ oder anorganischen Leimungsmitteln und gegebenenfalls in Gegenwart weiterer Hilfsstoffe zur Papiererzeugung, z.B. Retentions- und/oder Naßfestmittel.

Das Spinnfärben von Polyacrylnitril erfolgt beispielsweise durch Zusatz der erfindungsgemäßen Farbstoffe der Formel (I) zur Lösung von Polyacrylnitril, die auf bekannte Weise trocken oder naß versponnen werden kann.

Die Färbungen der erfindungsgemäßen Farbstoffe der Formel (I) auf Papier zeichnen sich durch gute Licht- und Naßechtheiten und durch eine hohe Affinität zur Faser aus, die insbesondere zu kaum oder nur schwach gefärbten Abwässern führt.

Die Färbungen auf Polyacrylnitril zeichnen sich ebenfalls durch gute Licht-, Naß-, Reib- und Dämpfechtheiten aus.

Die erfindungsgemäßen Farbstoffe der Formel (I) eignen sich ebenfalls als dichroitische Farbstoffe zur Verwendung in Polarisationsfolien.

Filme auf Basis von Polyvinylalkohol, die Jod oder dichroitische Farbstoffe als polarisierende Agentien enthalten, sind bekannt (z.B. M.M. Zwick, J. Appl. Polym. Sci., 9, 2393 - 2424 (1965), Nippon Kayaku JA 59-145 255, 60-156 759, 60-168 743). Solche Filme absorbieren Licht einer Polarisationsrichtung, während sie Licht in der dazu senkrechten Richtung durchlassen. Wichtig ist ein möglichst großer Quotient der Extinktionen in diesen beiden Richtungen. Weiterhin ist eine möglichst hohe Farbdichte im absorbierenden Zustand erforderlich. Ein Verfahren zur Herstellung von solchen Folien, die dichroitische Farbstoffe enthalten, ist aus EP-A 531 568 bekannt.

Die erfindungsgemäßen Farbstoffe der Formel (I) besitzen einen hohen molaren Extinktionskoeffizienten und sind somit dichroitischen Farbstoffen auf Basis von Azofarbstoffen überlegen.

Die erfindungsgemäßen Farbstoffe können einzeln, in Mischungen untereinander oder in Mischungen mit anderen Farbstoffen angewendet werden.

Die vorliegende Erfindung betrifft schließlich auch kationisch färbbare Fasern und Gewebe, tannierte Cellulosematerialien, Papier, Seide, Leder, insbesondere Papier, Fasern und Gewebe, die Polyacrylnitril enthalten sowie Polarisationsfolien, die dadurch gekennzeichnet sind, daß sie mindestens einen kationischen 1,3,4-Thiadiazolfarbstoff der Formel (I) enthalten.

### Beispiele

### Beispiel 1

45,9 g 3,4-Dimethoxyanilin wurden in 500 ml Eisessig mit 28,4 ml Acetanhydrid 30 min bei Raumtemperatur verrührt. Bei 5 bis 10°C wurden 76,4 g des 2-Amino-1,3,4-thiadiazols der Formel (V) mit R¹ = R² = 2-Hydroxypropyl und 49,2 ml 48 Gew.-%ige wässrige Schwefelsäure zugesetzt. Bei 5°C tropften während 75 min 55,8 ml 34,5 Gew.-%ige wässrige Natriumnitritlösung dazu. Über Nacht wurde bei Raumtemperatur gerührt. Mit 40 ml 30 Gew.-%ige wässriger Natronlauge wurde auf pH = 2 gestellt. Bei 35 bis 40°C tropften innerhalb von 4 h 55,9 ml Dimethylsulfat dazu, wobei durch Zudosieren von insgesamt 20 ml 30 Gew.-%ige wässrige Natronlauge der pH bei 1,5 bis 2 gehalten wurde. Mit 250 ml Wasser wurde verdünnt und mit 50 ml 30 Gew.-%ige wässriger Natronlauge versetzt. 2 h wurde bei Raumtemperatur gerührt. 44,7 g des Amins der Formel (IX) mit R⁷ = R⁸ = R⁹ = Wasserstoff und Z = NH als Schwefelsäuresalz wurden zugesetzt. 2 h wurde bei 35°C und pH = 2,3 gerührt. 540 ml konz. wässrige Kochsalzlösung wurden zugesetzt und der Farbstoff abgesaugt. Mit 1200 ml 10 Gew.-%ige wässriger Kochsalzlösung wurde nachgewaschen und in Vakuum getrocknet. Man erhielt 57 g des Farbstoffs der Formel (I) mit R¹ = R² = 2-Hydroxypropyl, R³ = Methyl, R⁴ = Methoxy, R⁶ = Acetamino, R⁵ = R⁷ = R⁹ = Wasserstoff, Z = NH und X⁻ = Chlorid.

Der Farbstoff besaß ein Absorptionsmaximum in Methanol/Eisessig 9/1 bei 645 nm und färbte holzschliffreies Papier in einem leicht grünstichigen Blau mit guten Licht- und Naßechtheiten.

### Beispiel 2

4,2 g des 2-Amino-1,3,4-thiadiazols der Formel (V) mit R¹ = R² = 2-Hydroxypropyl wurden in einer Mischung aus 40 ml Eisessig, 10 ml 85%iger Phosphorsäure und 5 ml 48%iger Schwefelsäure gelöst. Bei 4°C tropften 3,6 ml 5-molare wäßrige Natriumnitritlösung langsam dazu. Nach 30 Minuten wurde diese Diazoniumsalzlösung zu einer Lösung von 4,0 g des Diphenylaminderivates der Formel (VI) mit R⁴ bis R⁹ = Wasserstoff und Z = trans-CO-CH=CH-CO- in einer Mischung aus 50 ml Eisessig und 50 ml 85%iger Phosphorsäure gegeben. Nach Rühren über Nacht wurde auf Eis ausgetragen, abgesaugt und neutral gewaschen. Nach dem Trocknen erhielt man 5,6 g (67 % der Theorie) des Farbstoffs der Formel (XI) 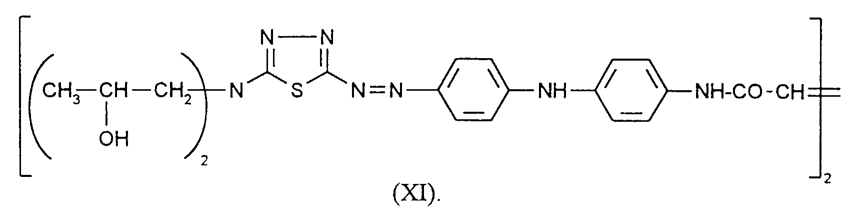 5,5 g des Farbstoffs der Formel (XI) wurden in 60 ml Eisessig gelöst. Bei 35°C wurden 1,2 ml Dimethylsulfat dazu gegeben und über Nacht bei 40°C gerührt. 0,5 g Natriumacetat und 0,6 ml Dimethylsulfat wurden zugesetzt und erneut über Nacht bei dieser Temperatur gerührt. Es wurde mit 200 ml Wasser verdünnt und mit konz. wäßriger Kochsalzlösung ausgefällt. Das Produkt wurde abgesaugt und getrocknet. Man erhielt 6,4 g (84 % der Theorie) des Farbstoffs der Formel (I) mit R¹ = R² = 2-Hydroxypropyl, R³ = Methyl, R⁴ bis R⁹ = Wasserstoff, Z = trans-CO-CH=CH-CO- und X⁻ = Chlorid.

Der Farbstoff besaß ein Absorptionsmaximum in Methanol/Eisessig 9/1 bei 617 nm und färbte holzschliffreies Papier in einem grünstichigen Blau.

Das eingesetzte Diphenylaminderivat der Formel (VI) wurde folgendermaßen hergestellt: Zu einer Lösung von 18,4 g 4-Aminodiphenylamin in 200 ml Ethylenchlorid wurden 8 g Fumarsäuredichlorid getropft. Über Nacht wurde bei Rückflußtemperatur gerührt, abgekühlt und abgesaugt. Das Produkt wurde in 500 ml 10%iger wäßriger Sodalösung verrührt, abgesaugt, mit Wasser gewaschen und getrocknet. Man erhielt 21,0 g des Diphenylaminderivats der Formel (VI) mit R⁴ bis R⁹ = Wasserstoff und Z = trans-CO-CH=CH-CO-.

Das FAB-Massenspektrum ergab die Massen m/e = 449 (M⁺+H) und m/e = 447 (M⁺-H).

### Beispiele 3 bis 40

Analog den Beispielen 1 und 2 wurden weitere Farbstoffe der Formel (I) hergestellt. Die Substitutionsmuster und soweit bestimmt, die λₘₐₓ-Werte sind aus der nachfolgenden Tabelle ersichtlich.

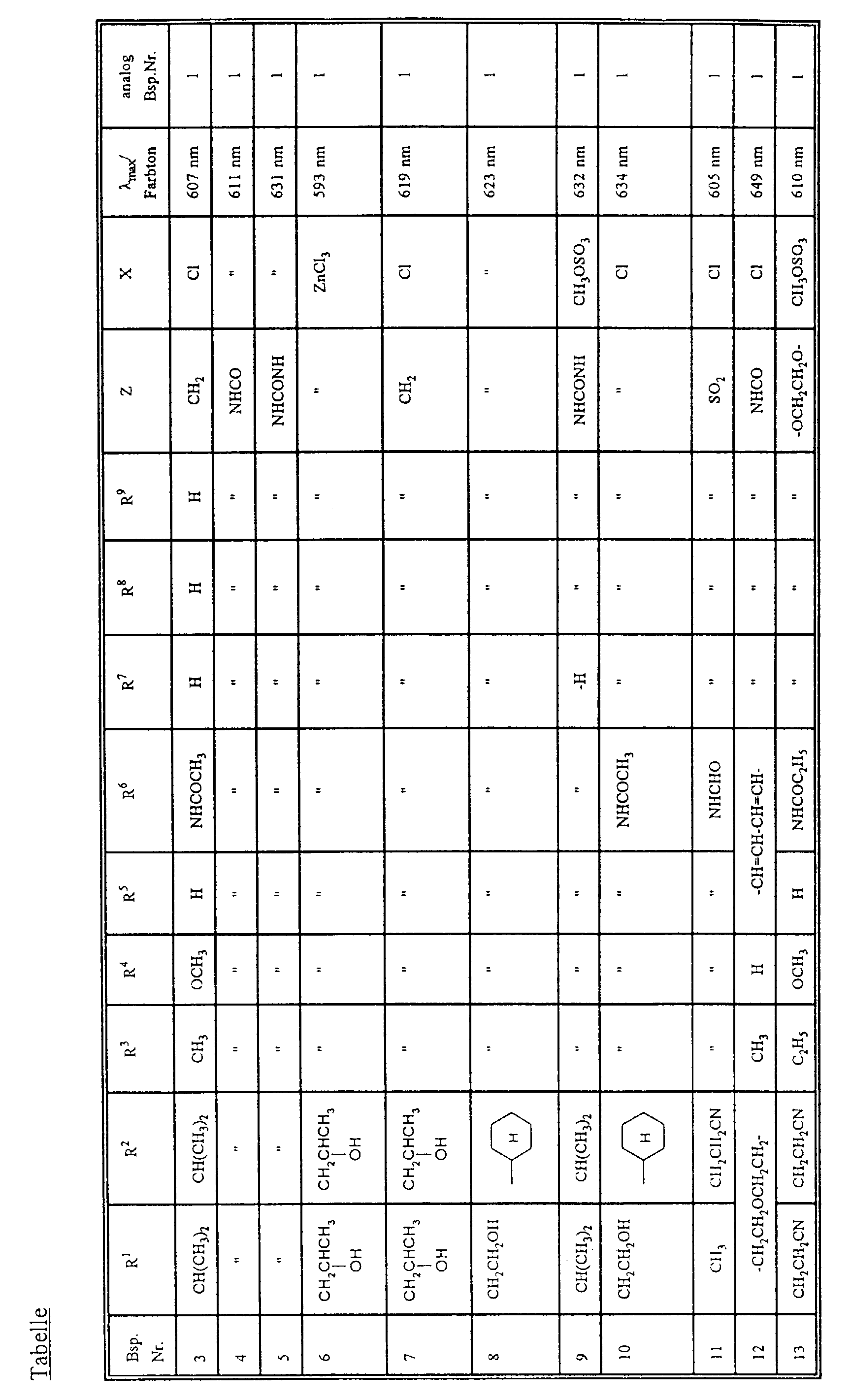

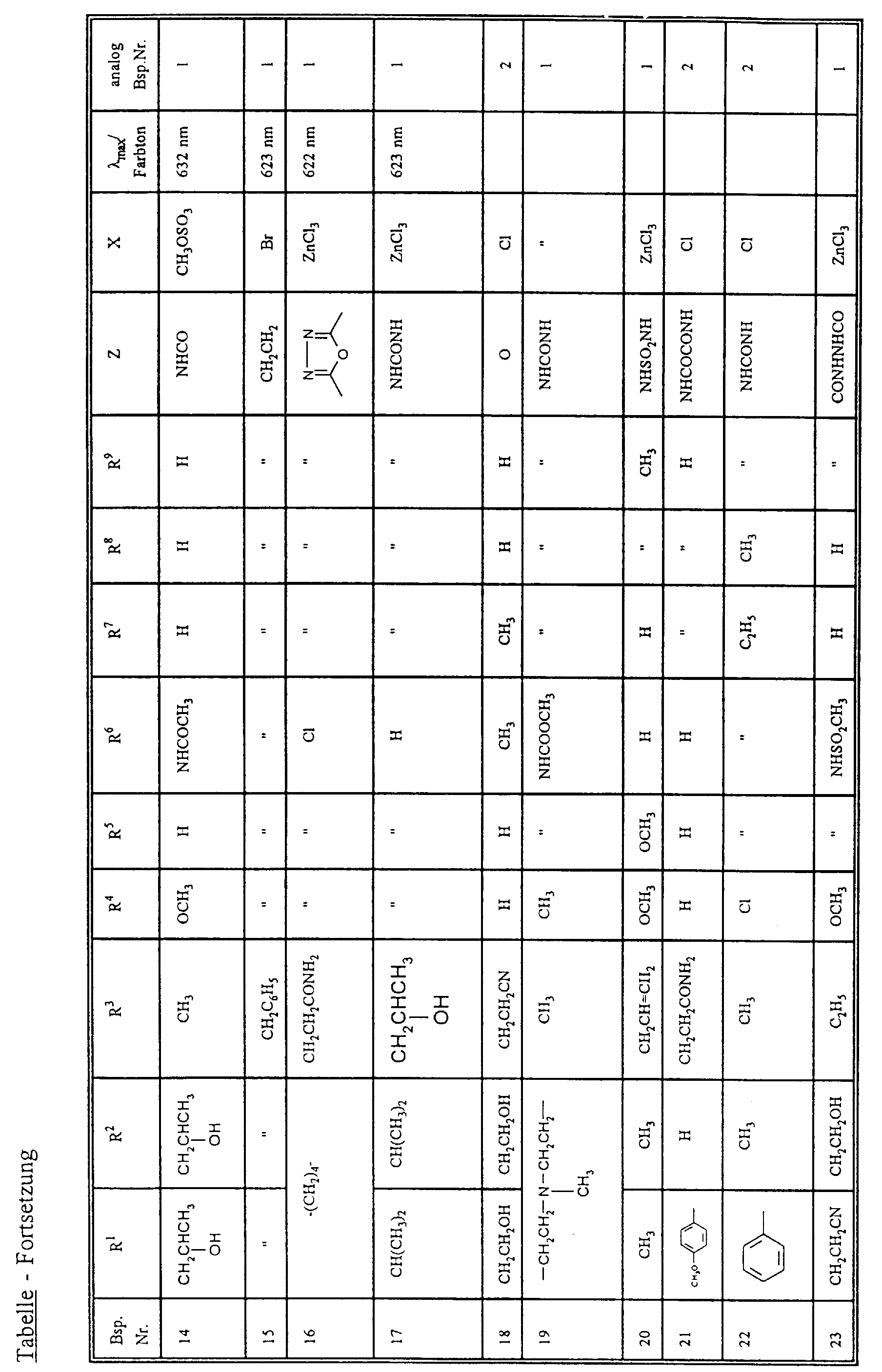

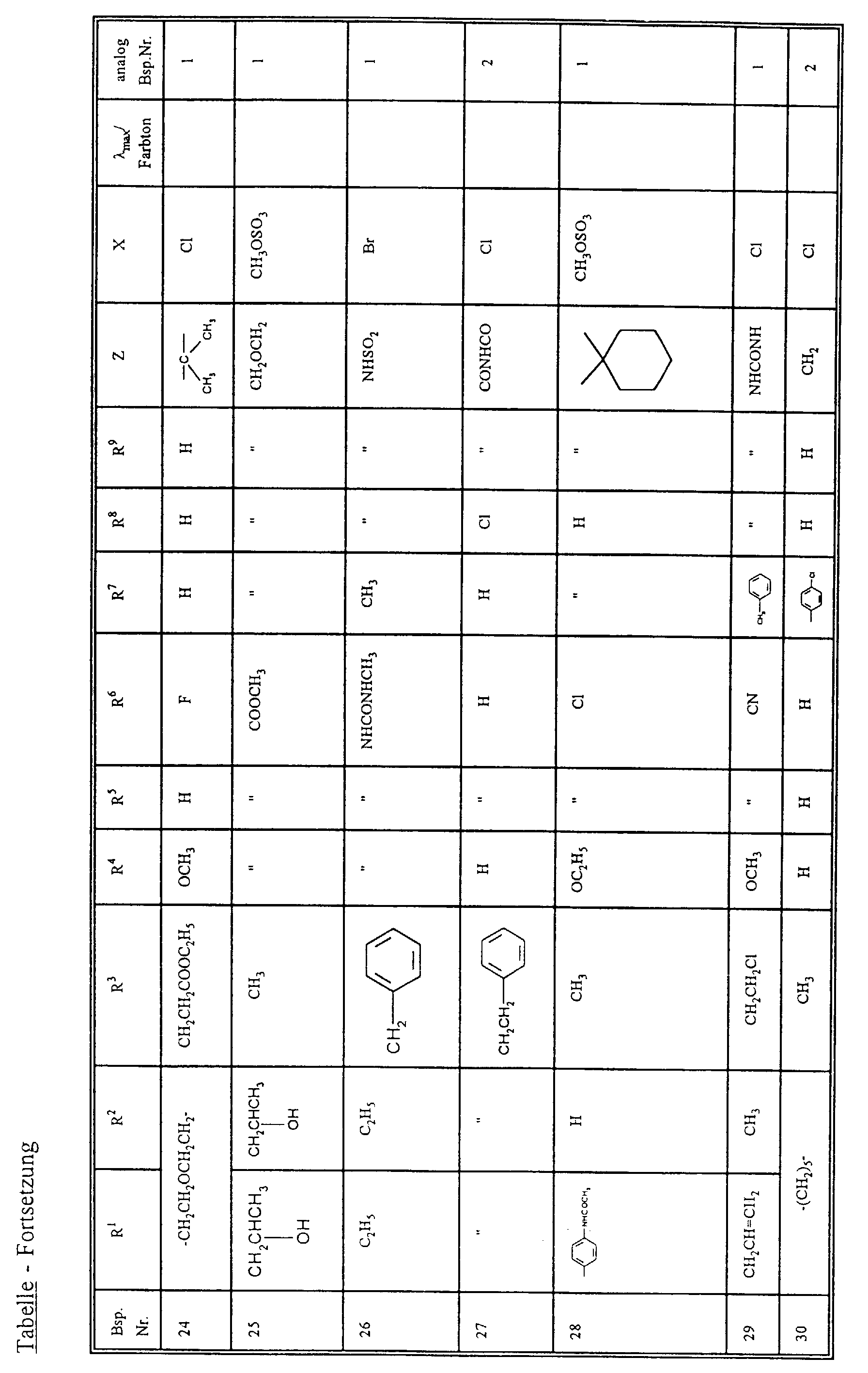

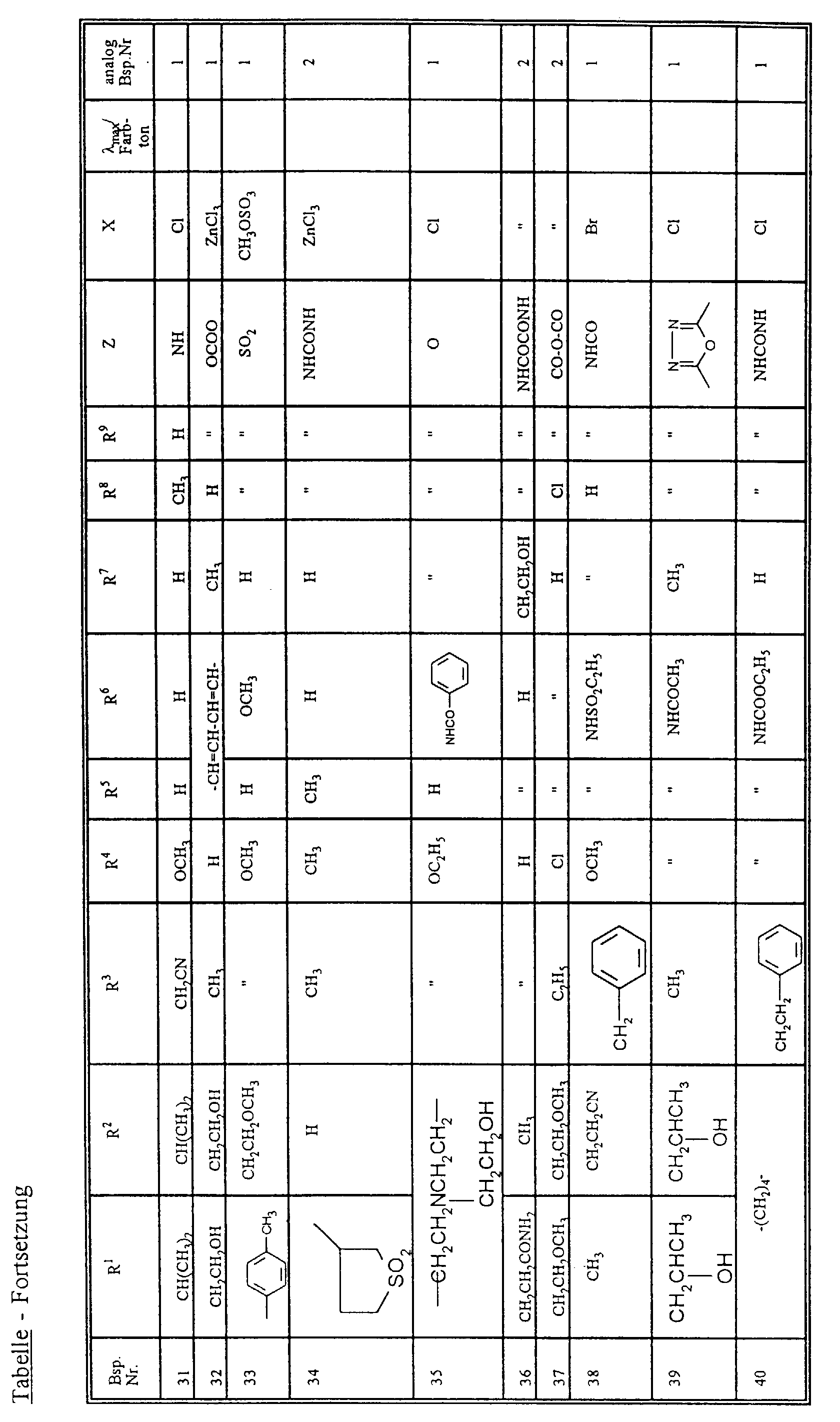

### Beispiel 41 (Färbung von Papier)

5 g einer Mischung aus 70 Gew.-% Birkenholzsulfat-Zellstoff und 30 Gew.-% gebleichtem Kiefernholz-Sulfatzellstoff wurden in 395 ml Wasser in einem Laborholländer auf 30 bis 40° SR gemahlen. Diese Mischung wurde auf 1 l mit Wasser aufgefüllt. Hierzu wurden eine Lösung von 25 ml des Farbstoffs des Beispiels 1 in 2,5 ml Wasser, 10 ml einer 1 Gew.-%igen wäßrigen Lösung von Harzleim Dynacoll VS 50 der Fa. Akzo Chemie, Düren, und 15 ml einer 1 Gew.-%igen wäßrigen Lösung von Aluminiumsulfat gegeben, wobei zwischen den Zugaben 8 Minuten gerührt wurde. Die gefärbte und geleimte Papiermasse wurde auf einen Laborblattbildner gegeben, gleichmäßig verteilt und abgesaugt. Anschließend wurde das leicht grünstichig blau gefärbte Papierblatt zwischen Filterpapier gepreßt und getrocknet.

Im Abwasser der Papierherstellung wurden absorptionsspektroskopisch 8 % des eingesetzten Farbstoffs nachgewiesen. Die Lichtechtheit und die Echtheiten gegen Wasser, Alkohol, Sodalösung und Essigsäure waren gut.

Ganz analog wurden die Farbstoffe der Beispiele 2 bis 40 eingesetzt.

### Beispiel 42 (Herstellung einer Polarisationsfolie)

In einer 8 Gew.-%igen wäßrigen Polyvinylalkohollösung wurden 2 % des Farbstoffs des Beispiels 16, 2,5 % Glycerin und 5 % Methanol gelöst (diese Prozentangaben beziehen sich auf Polyvinylalkohol). Mit einem Laborrakel wurde diese Lösung in einer Schichtdicke von 500 µm auf eine Glasplatte aufgetragen und getrocknet. Sie wurde dann abgelöst und mit einer Laborreckmaschine gereckt. Die Recktemperatur betrug 180°C, die Verweildauer 5 Minuten, die Reckgeschwindigkeit 100 mm/min, der Reckgrad 595 %. Die gereckte Folie hatte eine Dicke von 15,5 µm und eine Breite von 30,2 mm.

Der Dichroismus als Quotient der Extinktion in Reckrichtung der Folie und der Extinktion senkrecht dazu wurde bei 600 nm zu 3 und bei 700 nm zu 3,6 bestimmt.

Ganz analog wurden die Farbstoffe der Beispiele 1 bis 15 und 17 bis 40 eingesetzt.

## Patentansprüche

1. Kationische 1,3,4-Thiadiazolfarbstoffe der Formel (I) 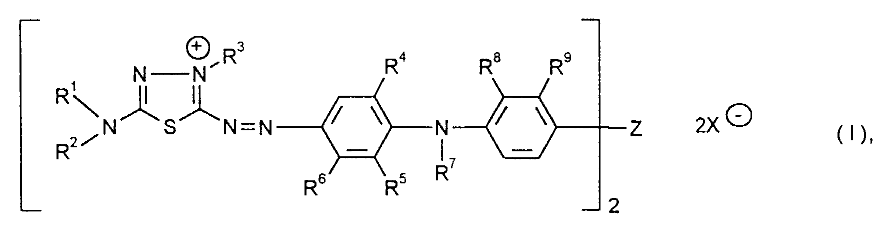 in der
R¹ und R² unabhängig voneinander für Wasserstoff, Alkyl, Alkenyl, Cycloalkyl, Aralkyl, Aryl oder einen gegebenenfalls über eine Methylen- oder Ethylenbrücke gebundenen Heterocyclus stehen,
wobei
R¹ und R² gemeinsam mit dem dazwischenliegenden Stickstoffatom auch einen Heterocyclus bilden können,
R³ für Alkyl, Alkenyl, Cycloalkyl oder Aralkyl steht,
R⁴ und R⁵ unabhängig voneinander für Wasserstoff, Alkyl, Alkoxy oder Halogen stehen,
R⁶ für Wasserstoff, Alkyl, Alkoxy, Aryloxy, Arylamino, Alkanoylamino, Aroylamino, Alkansulfonamino, Alkoxycarbonylamino, Alkylaminocarbonylamino, Halogen, Cyano, Alkoxycarbonyl oder Nitro steht
oder
R⁵ und R⁶ eine -CH=CH-CH=CH-Brücke bilden,
R⁷ für Wasserstoff, Alkyl, Cycloalkyl, Alkenyl, Aralkyl oder Aryl steht,
R⁸ und R⁹ unabhängig voneinander für Wasserstoff, Alkyl, Alkoxy oder Halogen stehen,
Z ein bivalentes Brückenglied und
X^{⊖} ein Anion bedeutet,
wobei alle genannten Alkyl-, Alkenyl-, Cycloalkyl-, Aralkyl-, Aryl-, Alkoxy- und heterocyclischen Reste gegebenenfalls mit nichtionogenen Substituenten, Carboxylgruppen, Ammoniumgruppen und/oder Pyridiniumgruppen substituiert sein können.

2. Kationische 1,3,4-Thiadiazolfarbstoffe nach Anspruch 1, dadurch gekennzeichnet, daß in Formel (I)
R¹ und R² unabhängig voneinander je für C₁-C₈-Alkyl, das gegebenenfalls durch Hydroxy, Halogen, Cyano, C₁-C₄-Alkoxy, Aminocarbonyl und/oder C₁-C₄-Alkoxycarbonyl substituiert ist, für Allyl, Cyclopentyl, Cyclohexyl, einen gegebenenfalls durch Halogen, Cyano, C₁-C₄-Alkyl, C₁-C₄-Alkoxy und/oder C₁-C₄-Alkanoylamino substituierten Benzyl-, Phenethyl- oder Phenylrest, für Tetramethylensulfonyl, Tetrahydrofurylmethyl, Pyridylmethyl oder Pyridylethyl stehen, wobei R² auch für Wasserstoff stehen kann,
oder
R¹ und R² gemeinsam mit dem dazwischenliegenden Stickstoffatom für einen gegebenenfalls durch bis zu 4 Methylgruppen substituierten Pyrrolidino-, Piperidino-, Morpholino- oder gegebenenfalls am Stickstoff durch Methyl, Ethyl, Hydroxyethyl oder Aminoethyl substituierten Piperazinorest stehen,
R³ für C₁-C₄-Alkyl, das gegebenenfalls durch Hydroxy, Halogen, Cyano, C₁-C₄-Alkoxy, Aminocarbonyl und/oder C₁-C₄-Alkoxycarbonyl substituiert ist, für Allyl oder einen gegebenenfalls durch Halogen, C₁-C₄-Alkyl und/oder C₁-C₄-Alkoxy substituierten Benzyl- oder Phenethylrest steht,
R⁴ und R⁵ unabhängig voneinander für Wasserstoff, C₁-C₄-Alkyl, C₁-C₄-Alkoxy oder Halogen stehen,
R⁶ für Wasserstoff, C₁-C₄-Alkyl, C₁-C₄-Alkoxy, C₆-C₁₀-Aryloxy, C₆-C₁₀-Arylamino, C₁-C₄-Alkanoylamino, C₆-C₁₀-Aroylamino, C₁-C₄-Alkansulfonylamino, C₁-C₄-Alkoxycarbonylamino, C₁-C₄-Alkylaminocarbonylamino, Halogen, Cyano, C₁-C₄-Alkoxycarbonyl oder Nitro steht,
oder
R⁵ und R⁶ eine -CH=CH-CH=CH-Brücke bilden,
R⁷ für Wasserstoff, C₁-C₄-Alkyl, das gegebenenfalls durch Hydroxy, Halogen, Cyano, C₁-C₄-Alkoxy, Aminocarbonyl und/ oder C₁-C₄-Alkoxycarbonyl, substituiert ist, Allyl, Cyclopentyl, Cyclohexyl oder einen gegebenenfalls durch Halogen, C₁-C₄-Alkyl und/oder C₁-C₄-Alkoxy substituierten Benzyl-, Phenethyl- oder Phenylrest steht,
R⁸ und R⁹ unabhängig voneinander für Wasserstoff, C₁-C₄-Alkyl, C₁-C₄-Alkoxy oder Halogen stehen,
Z für -(CH₂)ₙ-, -C(CH₃)₂-, Sauerstoff, Schwefel, NR¹⁰, SO₂, -O-(CH₂)ₙ₁-O-, -OCO-, -OCOO-, -NHCO-, -NHCONH-, -NHCOCONH-, -NHCOCH=CHCONH-, -NHSO₂-, -NHSO₂NH-, -CONHCO-, -CONHNHCO- oder eine Gruppe der Formeln (II) oder (III) steht 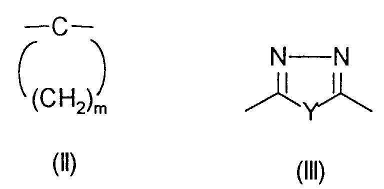
in denen
n und n₁ 1, 2, 3 oder 4,
m 4, 5 oder 6,
R¹⁰ Wasserstoff oder C₁-C₄-Alkyl und
Y Sauerstoff, Schwefel oder NH bedeuten und
X^{⊖} ein Anion bedeutet.

3. Kationische 1,3,4-Thiadiazolfarbstoffe nach Ansprüchen 1 und 2, dadurch gekennzeichnet, daß in Formel (I)
R¹ und R² unabhängig voneinander für Methyl, Ethyl, Propyl, Butyl, Methylpropyl, Pentyl, Methylbutyl, Dimethylpropyl, Hexyl, Hydroxyethyl, Hydroxypropyl, Chlorethyl, Cyanomethyl, Cyanoethyl, Cyanopropyl, Methoxyethyl, Ethoxyethyl, Methoxypropyl, Aminocarbonylmethyl, Aminocarbonylethyl, Methoxycarbonylmethyl, Methoxycarbonxylethyl, Allyl, Cyclohexyl, Benzyl, Phenethyl, Methylbenzyl, Chlorbenzyl, Methoxybenzyl, Phenyl, Chlorphenyl, Methylphenyl, Methoxyphenyl, Ethoxyphenyl, Acetaminophenyl, Cyanophenyl, Tetramethylensulfon-3-yl, Furfuryl, 2- oder 4-Pyridylmethyl oder 2- oder 4-Pyridylethyl stehen und R² auch Wasserstoff bedeuten kann
oder
R¹ und R² gemeinsam mit dem dazwischenliegenden Stickstoffatom für Pyrrolidino, Piperidino, Morpholino, Piperazino, Methylpiperazino, Ethylpiperazino, Hydroxyethylpiperazino oder Aminoethylpiperazino stehen,
R³ für Methyl, Ethyl, Propyl, Butyl, Hydroxyethyl, Hydroxypropyl, Hydroxybutyl, Chlorethyl, Cyanomethyl, Cyanoethyl, Cyanopropyl, Methylethyl, Ethoxyethyl, Methoxypropyl, Aminocarbonylethyl, Methoxycarbonylethyl, Ethoxycarbonylethyl, Allyl, Benzyl, Phenethyl, Methylbenzyl, Chlorbenzyl oder Methoxybenzyl steht,
R⁴ und R⁵ unabhängig voneinander für Wasserstoff, Methyl, Ethyl, Methoxy, Ethoxy oder Chlor stehen,
R⁶ für Wasserstoff, Methyl, Ethyl, Methoxy, Ethoxy, Phenoxy, Anilino, Formylamino, Acetylamino, Propionylamino, Trifluoracetylamino, Benzoylamino, Methansulfonylamino, Ethansulfonylamino, Methoxycarbonylamino, Ethoxycarbonylamino, Methylaminocarbonylamino, Ethylaminocarbonylamino, Propyl aminocarb onylamino, Butyl aminocarbonylamino, Fluor, Chlor, Brom, Cyano, Methoxycarbonyl, Ethoxycarbonyl oder Nitro steht
oder
R⁵ und R⁶ eine -CH=CH-CH=CH-Brücke bilden,
R⁷ für Wasserstoff, Methyl, Ethyl, Propyl, Butyl, Hydroxyethyl, Hydroxypropyl, Chlorethyl, Cyanomethyl, Cyanoethyl, Cyanopropyl, Methoxyethyl, Ethoxyethyl, Aminocarbonylethyl, Methoxycarbonylethyl, Ethoxycarbonylethyl, Allyl, Benzyl, Phenethyl, Methylbenzyl, Phenyl, Chlorphenyl, Methylphenyl oder Methoxyphenyl steht,
R⁸ und R⁹ unabhängig voneinander für Wasserstoff, Methyl, Methoxy oder Chlor stehen,
Z für -CH₂-, -CH₂CH₂-, -C(CH₃)₂-, Sauerstoff, NH, SO₂, -O(CH₂)₂-O-, -NHCO-, -NHCONH-, -NHCOCH=CHCONH-, -NHSO₂-, -CONHNHCO- oder die Gruppe der Formel (II) mit m = 5 oder die Gruppe der Formel (III) mit Y = Sauerstoff steht und
X⁻ ein Anion bedeutet.

4. Kationische 1,3,4-Thiadiazolfarbstoffe nach Ansprüchen 1 bis 3, dadurch gekennzeichnet, daß in Formel (I)
R¹ und R² unabhängig voneinander für Methyl, Ethyl, Propyl, Butyl, Hydroxyethyl, Hydroxypropyl, Cyanoethyl, Methoxyethyl, Ethoxyethyl, Methoxyphenyl oder Acetaminophenyl stehen und R² auch Wasserstoff bedeuten kann
oder
R¹ und R² gemeinsam mit dem dazwischenliegenden Stickstoffatom für Morpholino stehen,
R³ für Methyl, Ethyl, Hydroxyethyl, Hydroxypropyl, Cyanoethyl oder Aminocarbonylethyl steht,
R⁴ für Methyl, Methoxy, Ethoxy oder Chlor steht,
R⁵, R⁸ und R⁹ für Wasserstoff stehen,
R⁶ für Wasserstoff, Methyl, Methoxy, Formylamino, Acetylamino, Chlor oder Cyano steht,
R⁷ für Wasserstoff, Methyl, Hydroxyethyl, Hydroxypropyl oder Cyanoethyl steht,
Z für NH, SO₂, -NHCO-, -NHCONH- oder die Gruppe der Formel (III) mit Y = Sauerstoff steht und
X⁻ ein Anion bedeutet.

5. Kationische 1,3,4-Thiadiazolfarbstoffe nach Ansprüchen 1 bis 4, dadurch gekennzeichnet, daß in Formel (I)
R⁷ für Wasserstoff steht und
alle anderen Reste die in Anspruch 4 angegebene Bedeutung haben.

6. Anhydrobasen der Formel (IV) 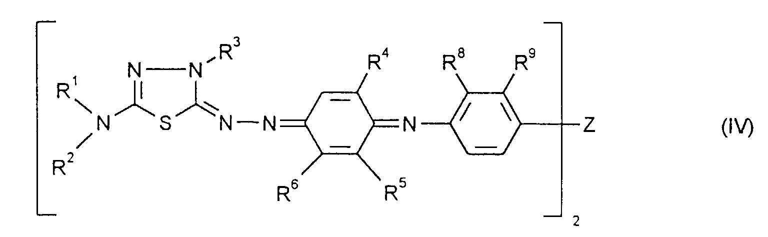 in der R¹ bis R⁶ R⁸, R⁹ und Z die in Anspruch 1 angegebene Bedeutung haben.

7. Verfahren zur Herstellung von kationischen 1,3,4-Thiadiazolfarbstoffen des Anspruchs 1, dadurch gekennzeichnet, daß man 2-Amino-1,3,4-thiadiazole der Formel (V) 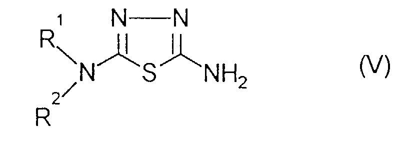 in der
R¹ und R² die in Anspruch 1 angegebene Bedeutung haben,
auf Diphenylaminderivate der Formel (VI) kuppelt 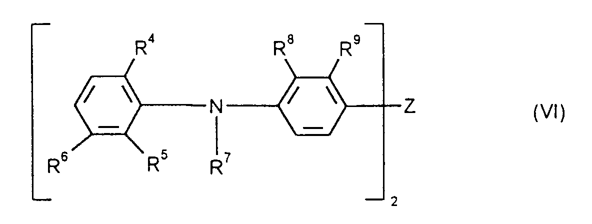 in der
R⁴ bis R⁹ und Z die in Anspruch 1 angegebene Bedeutung haben und dann mit Verbindungen der Formel (VII) quaternisiert
R³X (VII),
in der
R³ die in Anspruch 1 angegebene Bedeutung hat und
X für eine Gruppe steht, die dem ungeladenen Anion X^{⊖} entspricht wie es in Anspruch 1 angegeben ist.

8. Verfahren zur Herstellung von kationischen 1,3,4-Thiadiazolfarbstoffen des Anspruchs 1, dadurch gekennzeichnet, daß man Farbstoffe der Formel (VIII) 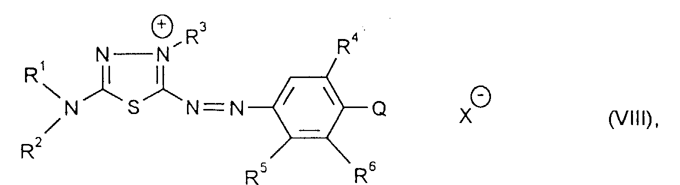 in der
R¹ bis R⁶ und X die in Anspruch 1 angegebene Bedeutung haben und
Q für Halogen, Hydroxy, Alkoxy, Cycloalkoxy, Aryloxy, Amino, Mono- oder Dialkylamino, Acyloxy oder Acylamino steht,
mit Aminen der Formel (IX) umsetzt 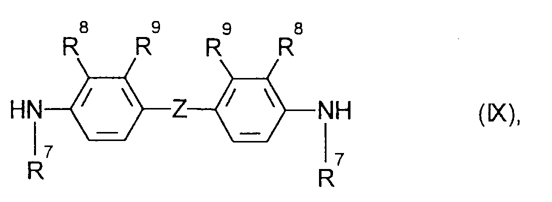 in der
R⁷ bis R⁹ und Z die in Anspruch 1 angegebene Bedeutung haben.

9. Verwendung von kationischen 1,3,4-Thiadiazolfarbstoffen des Anspruchs 1 zum Färben und Bedrucken von kationisch färbbaren Fasern und Geweben, tannierten Cellulosematerialien, Papier, Seide und Leder, insbesondere zum Färben von Papier und zum Spinnfärben von Polyacrylnitril und zur Herstellung von Schreibflüssigkeiten, Stempelflüssigkeiten, Kugelschreiberpasten und ink-jet-Tinten sowie als dichroitische Farbstoffe in Polarisationsfolien.

10. Kationisch färbbare Fasern und Gewebe, tannierte Cellulosematerialien, Papier, Seide, Leder, insbesondere Papier, Fasern und Gewebe die Polyacrylnitril enthalten, sowie Polarisationsfolien, dadurch gekennzeichnet, daß sie mindestens einen kationischen 1,3,4-Thiadiazolfarbstoff des Anspruchs 1 enthalten.

## Claims

1. Cationic 1,3,4-thiadiazole dyestuffs of the formula (I) 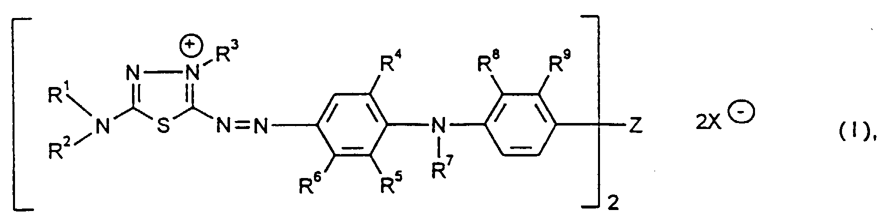 in which
R¹ and R² independently of one another represent hydrogen, alkyl, alkenyl, cycloalkyl, aralkyl, aryl or a heterocyclic radical which is optionally bonded via a methylene or ethylene bridge,
and wherein
R¹ and R², together with the nitrogen atom in between, can also form a heterocyclic radical,
R³ represents alkyl, alkenyl, cycloalkyl or aralkyl,
R⁴ and R⁵ independently of one another represent hydrogen, alkyl, alkoxy or halogen,
R⁶ represents hydrogen, alkyl, alkoxy, aryloxy, arylamino, alkanoylamino, aroylamino, alkanesulphonamino, alkoxycarbonylamino, alkylaminocarbonylamino, halogen, cyano, alkoxycarbonyl or nitro
or
R⁵ and R⁶ form a -CH=CH-CH=CH- bridge,
R⁷ represents hydrogen, alkyl, cycloalkyl, alkenyl, aralkyl or aryl,
R⁸ and R⁹ independently of one another represent hydrogen, alkyl, alkoxy or halogen,
Z denotes a bivalent bridge member and
X^{⊖} denotes an anion,
and wherein all the alkyl, alkenyl, cycloalkyl, aralkyl, aryl, alkoxy and heterocyclic radicals mentioned can be optionally substituted by non-ionic substituents, carboxyl groups, ammonium groups and/or pyridinium groups.

2. Cationic 1,3,4-thiadiazole dyestuffs according to Claim 1, characterized in that, in formula (I),
R¹ and R² independently of one another each represent C₁-C₈-alkyl, which is optionally substituted by hydroxyl, halogen, cyano, C₁-C₄-alkoxy, aminocarbonyl and/or C₁-C₄-alkoxycarbonyl, or represent allyl, cyclopentyl, cyclohexyl or a benzyl, phenethyl or phenyl radical which is optionally substituted by halogen, cyano, C₁-C₄-alkyl, C₁-C₄-alkoxy and/or C₁-C₄-alkanoylamino, or represent tetramethylenesulphonyl, tetrahydrofurylmethyl, pyridylmethyl or pyridylethyl, and wherein R² can also represent hydrogen,
or
R¹ and R², together with the nitrogen atom in between, represent a pyrrolidino, piperidino or morpholino radical which is optionally substituted by up to 4 methyl groups or a piperazino radical which is optionally substituted on the nitrogen by methyl, ethyl, hydroxyethyl or aminoethyl,
R³ represents C₁-C₄-alkyl, which is optionally substituted by hydroxyl, halogen, cyano, C₁-C₄-alkoxy, aminocarbonyl and/or C₁-C₄-alkoxycarbonyl, or represents allyl or a benzyl or phenethyl radical which is optionally substituted by halogen, C₁-C₄-alkyl and/or C₁-C₄-alkoxy,
R⁴ and R⁵ independently of one another represent hydrogen, C₁-C₄-alkyl, C₁-C₄-alkoxy or halogen,
R⁶ represents hydrogen, C₁-C₄-alkyl, C₁-C₄-alkoxy, C₆-C₁₀-aryloxy, C₆-C₁₀-arylamino, C₁-C₄-alkanoylamino, C₆-C₁₀-aroylamino, C₁-C₄-alkanesulphonylamino, C₁-C₄-alkoxycarbonylamino, C₁-C₄-alkylaminocarbonylamino, halogen, cyano, C₁-C₄-alkoxycarbonyl or nitro,
or
R⁵ and R⁶ form a -CH=CH-CH=CH- bridge,
R⁷ represents hydrogen, C₁-C₄-alkyl, which is optionally substituted by hydroxyl, halogen, cyano, C₁-C₄-alkoxy, aminocarbonyl and/or C₁-C₄-alkoxycarbonyl, allyl, cyclopentyl, cyclohexyl or a benzyl, phenethyl or phenyl radical which is optionally substituted by halogen, C₁-C₄-alkyl and/or C₁-C₄-alkoxy,
R⁸ and R⁹ independently of one another represent hydrogen, C₁-C₄-alkyl, C₁-C₄-alkoxy or halogen,
Z represents -(CH₂)ₙ-, -C(CH₃)₂-, oxygen, sulphur, NR¹⁰, SO₂, -O-(CH₂)ₙ₁-O-, -OCO-, -OCOO-, -NHCO-, -NHCONH-, -NHCOCONH-, -NHCOCH=CHCONH-, -NHSO₂-, -NHSO₂NH-, -CONHCO-, -CONHNHCO- or a group of the formulae (II) or (III) 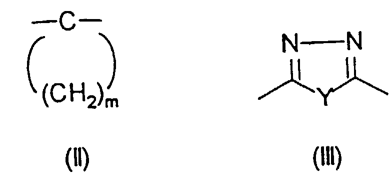
in which
n and n₁ denote 1, 2, 3 or 4,
m denotes 4, 5 or 6,
R¹⁰ denotes hydrogen or C₁-C₄-alkyl and
Y denotes oxygen, sulphur or NH, and
X^{⊖} denotes an anion.

3. Cationic 1,3,4-thiadiazole dyestuffs according to Claims 1 and 2, characterized in that, in formula (I),
R¹ and R² independently of one another represent methyl, ethyl, propyl, butyl, methylpropyl, pentyl, methylbutyl, dimethylpropyl, hexyl, hydroxyethyl, hydroxypropyl, chloroethyl, cyanomethyl, cyanoethyl, cyanopropyl, methoxyethyl, ethoxyethyl, methoxypropyl, aminocarbonylmethyl, aminocarbonylethyl, methoxycarbonylmethyl, methoxycarbonylethyl, allyl, cyclohexyl, benzyl, phenethyl, methylbenzyl, chlorobenzyl, methoxybenzyl, phenyl, chlorophenyl, methylphenyl, methoxyphenyl, ethoxyphenyl, acetaminophenyl, cyanophenyl, tetramethylenesulphon-3-yl, furfuryl, 2- or 4-pyridylmethyl or 2- or 4-pyridylethyl, and R² can also denote hydrogen
or
R¹ and R², together with the nitrogen atom in between, represent pyrrolidino, piperidino, morpholino, piperazino, methylpiperazino, ethylpiperazino, hydroxyethylpiperazino or aminoethylpiperazino,
R³ represents methyl, ethyl, propyl, butyl, hydroxyethyl, hydroxypropyl, hydroxybutyl, chloroethyl, cyanomethyl, cyanoethyl, cyanopropyl, methylethyl, ethoxyethyl, methoxypropyl, aminocarbonylethyl, methoxycarbonylethyl, ethoxycarbonylethyl, allyl, benzyl, phenethyl, methylbenzyl, chlorobenzyl or methoxybenzyl,
R⁴ and R⁵ independently of one another represent hydrogen, methyl, ethyl, methoxy, ethoxy or chlorine,
R⁶ represents hydrogen, methyl, ethyl, methoxy, ethoxy, phenoxy, anilino, formylamino, acetylamino, propionylamino, trifluoroacetylamino, benzoylamino, methanesulphonylamino, ethanesulphonylamino, methoxycarbonylamino, ethoxycarbonylamino, methylaminocarbonylamino, ethylaminocarbonylamino, propylaminocarbonylamino, butylaminocarbonylamino, fluorine, chlorine, bromine, cyano, methoxycarbonyl, ethoxycarbonyl or nitro
or
R⁵ and R⁶ form a -CH=CH-CH=CH- bridge,
R⁷ represents hydrogen, methyl, ethyl, propyl, butyl, hydroxyethyl, hydroxypropyl, chloroethyl, cyanomethyl, cyanoethyl, cyanopropyl, methoxyethyl, ethoxyethyl, aminocarbonylethyl, methoxycarbonylethyl, ethoxycarbonylethyl, allyl, benzyl, phenethyl, methylbenzyl, phenyl, chlorophenyl, methylphenyl or methoxyphenyl,
R⁸ and R⁹ independently of one another represent hydrogen, methyl, methoxy or chlorine,
Z represents -CH₂-, -CH₂CH₂-, -C(CH₃)₂-, oxygen, NH, SO₂, -O(CH₂)₂-O-, -NHCO-, -NHCONH-, -NHCOCH=CHCONH-, -NHSO₂-, -CONHNHCO- or the group of the formula (II) where m = 5 or the group of the formula (III) where Y = oxygen and
X⁻ denotes an anion.

4. Cationic 1,3,4-thiadiazole dyestuffs according to Claims 1 to 3, characterized in that, in formula (I),
R¹ and R² independently of one another represent methyl, ethyl, propyl, butyl, hydroxyethyl, hydroxypropyl, cyanoethyl, methoxyethyl, ethoxyethyl, methoxyphenyl or acetaminophenyl, and R² can also denote hydrogen
or
R¹ and R², together with the nitrogen atom in between, represent morpholino,
R³ represents methyl, ethyl, hydroxyethyl, hydroxypropyl, cyanoethyl or aminocarbonylethyl,
R⁴ represents methyl, methoxy, ethoxy or chlorine,
R⁵, R⁸ and R⁹ represent hydrogen,
R⁶ represents hydrogen, methyl, methoxy, formylamino, acetylamino, chlorine or cyano,
R⁷ represents hydrogen, methyl, hydroxyethyl, hydroxypropyl or cyanoethyl,
Z represents NH, SO₂, -NHCO-, -NHCONH- or the group of the formula (III) where Y = oxygen and
X⁻ denotes an anion.

5. Cationic 1,3,4-thiadiazole dyestuffs according to Claims 1 to 4, characterized in that, in formula (I),
R⁷ represents hydrogen and
all the other radicals have the meaning given in Claim 4.

6. Anhydrobases of the formula (IV) 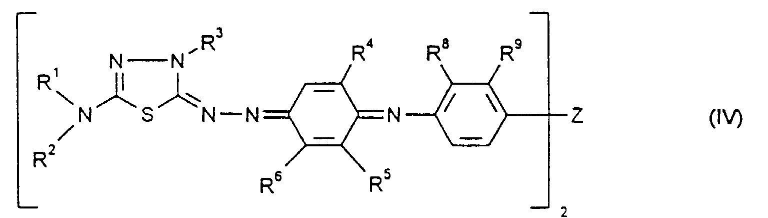 in which R¹ to R⁶, R⁸, R⁹ and Z have the meaning given in Claim 1.

7. Process for the preparation of cationic 1,3,4-thiadiazole dyestuffs of Claim 1, characterized in that 2-amino-1,3,4-thiadiazoles of the formula (V) 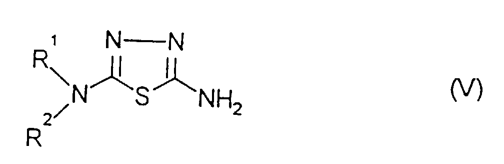 in which
R¹ and R² have the meaning given in Claim 1,
are coupled to diphenylamine derivatives of the formula (VI) 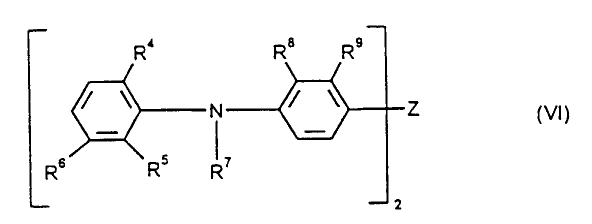 in which
R⁴ to R⁹ and Z have the meaning given in Claim 1, and the products are then quaternized with compounds of the formula (VII)
R³X (VII)
in which
R³ has the meaning given in Claim 1 and
X represents a group which corresponds to the non-charged anion X^{⊖} as given in Claim 1.

8. Process for the preparation of cationic 1,3,4-thiadiazole dyestuffs of Claim 1, characterized in that dyestuffs of the formula (VIII) 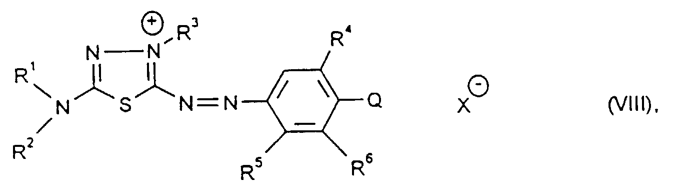 in which
R¹ to R⁶ and X have the meaning given in Claim 1 and
Q represents halogen, hydroxyl, alkoxy, cycloalkoxy, aryloxy, amino, mono- or dialkylamino, acyloxy or acylamino,
are reacted with amines of the formula (IX) 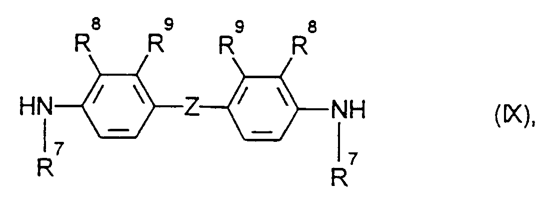 in which
R⁷ to R⁹ and Z have the meaning given in Claim 1.

9. Use of cationic 1,3,4-thiadiazole dyestuffs of Claim 1 for dyeing and printing cationically dyeable fibres and fabrics, tannin-treated cellulose materials, paper, silk and leather, in particular for dyeing paper and for spin dyeing polyacrylonitrile, and for the preparation of writing liquids, stamping liquids, ball-point pen pastes and ink jet inks, and as dichroic dyestuffs in polarizing films.

10. Cationically dyeable fibres and fabric, tannin-treated cellulose materials, paper, silk and leather, in particular paper, fibres and fabric which comprise polyacrylonitrile, and polarizing films, characterized in that they comprise at least one cationic 1,3,4-thiadiazole dyestuff of Claim 1.

## Revendications

1. Colorants du 1,3,4-thiadiazole cationiques de formule (I) 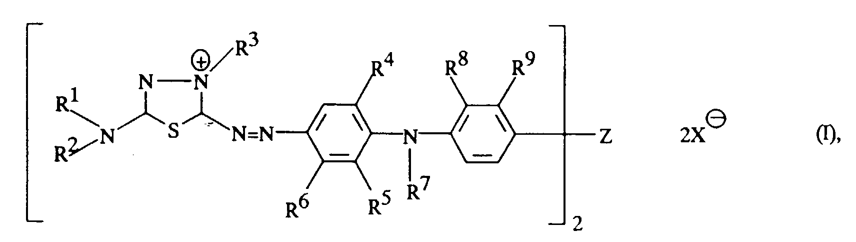 dans laquelle
R¹ et R² représentent indépendamment l'un de l'autre l'hydrogène, un groupe alkyle, alcényle, cycloalkyle, aralkyle, aryle ou un hétérocycle éventuellement fixé par un pont méthylène ou éthylène,
où
R¹ et R² peuvent aussi former avec l'atome d'azote situé entre eux un hétérocycle,
R³ représente un groupe alkyle, alcényle, cycloalkyle ou aralkyle,
R⁴ et R⁵ représentent indépendamment l'un de l'autre l'hydrogène, un groupe alkyle, alcoxy ou un halogène,
R⁶ représente l'hydrogène, un groupe alkyle, alcoxy, aryloxy, arylamino, alcanoylamino, aroylamino, alcanesulfonamino, alcoxycarbonylamino, alkylaminocarbonylamino, halogène, cyano, alcoxycarbonyle ou nitro
ou
R⁵ et R⁶ forment un pont -CH=CH-CH=CH-,
R⁷ représente l'hydrogène, un groupe alkyle, cycloalkyle, alcényle, aralkyle ou aryle,
R⁸ et R⁹ représentent indépendamment l'un de l'autre l'hydrogène, un groupe alkyle, alcoxy ou un halogène,
Z représente un élément de pontage bivalent et
X^{⊖} représente un anion
où tous les reste alkyle, alcényle, cycloalkyle, aralkyle, aryle, alcoxy et hétérocyclique cités peuvent éventuellement être substitués par des substituants non ionogènes, des groupes carboxyle, des groupes ammonium et/ou des groupes pyridinium.

2. Colorants du 1,3,4-thiadiazole cationiques selon la revendication 1, caractérisés en ce que, dans la formule (I),
R¹ et R² représentent chacun indépendamment l'un de l'autre un groupe alkyle en C₁-C₈ qui est éventuellement substitué par hydroxyle, halogène, cyano, alcoxy en C₁-C₄, aminocarbonyle et/ou alcoxycarbonyle en C₁-C₄, un groupe allyle, cyclopentyle, cyclohexyle, un reste benzyle, phénéthyle ou phényle éventuellement substitué par halogène, cyano, alkyle en C₁-C₄, alcoxy en C₁-C₄ et/ou alcanoylamino en C₁-C₄, un groupe tétraméthylènesulfonyle, tétrahydrofurylméthyle, pyridylméthyle ou pyridyléthyle, R² pouvant aussi représenter l'hydrogène,
ou
R¹ et R² représentent avec l'atome d'azote situé entre eux un reste pyrrolidino, pipéridino, morpholino éventuellement substitué par jusqu'à 4 groupes méthyle ou un reste pipérazino éventuellement substitué sur l'azote par méthyle, éthyle, hydroxyéthyle ou aminoéthyle,
R³ représente un groupe alkyle en C₁-C₄ qui est éventuellement substitué par hydroxyle, halogène, cyano, alcoxy en C₁-C₄, aminocarbonyle et/ou alcoxycarbonyle en C₁-C₄, un reste allyle ou un reste benzyle ou phénéthyle éventuellement substitué par halogène, alkyle en C₁-C₄ et/ou alcoxy en C₁-C₄,
R⁴ et R⁵ représentent indépendamment l'un de l'autre l'hydrogène, un groupe alkyle en C₁-C₄, alcoxy en C₁-C₄ ou un halogène,
R⁶ représente l'hydrogène, un groupe alkyle en C₁-C₄, alcoxy en C₁-C₄, aryloxy en C₆-C₁₀, arylamino en C₆-C₁₀, alcanoylamino en C₁-C₄, aroylamino en C₆-C₁₀, alcanesulfonylamino en C₁-C₄, alcoxycarbonylamino en C₁-C₄, alkylaminocarbonylamino en C₁-C₄, halogène, cyano, alcoxycarbonyle en C₁-C₄ ou nitro,
ou
R⁵ et R⁶ forment un pont -CH=CH-CH=CH-,
R⁷ représente l'hydrogène, un groupe alkyle en C₁-C₄ qui est éventuellement substitué par hydroxyle, halogène, cyano, alcoxy en C₁-C₄, aminocarbonyle et/ou alcoxycarbonyle en C₁-C₄, un reste allyle, cyclopentyle, cyclohexyle ou un reste benzyle, phénéthyle ou phényle éventuellement substitué par halogène, alkyle en C₁-C₄ et/ou alcoxy en C₁-C₄,
R⁸ et R⁹ représentent indépendamment l'un de l'autre l'hydrogène, un groupe alkyle en C₁-C₄, alcoxy en C₁-C₄ ou un halogène,
Z représente -(CH₂)ₙ-, -C(CH₃)₂-, l'oxygène, le soufre, NR¹⁰, SO₂, -O-(CH₂)ₙ₁-O-, -OCO-, -OCOO-, -NHCO-, -NHCONH-, -NHCOCONH-, -NHCOCH=CHCONH-, -NHSO₂-, -NHSO₂NH-, -CONHCO-, -CONHNHCO- ou un groupe de formule (II) ou (III) 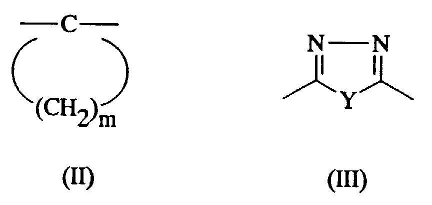
dans lesquelles
n et n₁ représentent 1, 2, 3 ou 4,
m représente 4, 5 ou 6,
R¹⁰ représente l'hydrogène ou un groupe alkyle en C₁-C₄ et
Y représente l'oxygène, le soufre ou NH et
X^{⊖} représente un anion.

3. Colorants du 1,3,4-thiadiazole cationiques selon les revendications 1 et 2, caractérisés en ce que, dans la formule (I),
R¹ et R² représentent indépendamment l'un de l'autre un groupe méthyle, éthyle, propyle, butyle, méthylpropyle, pentyle, méthylbutyle, diméthylpropyle, hexyle, hydroxyéthyle, hydroxypropyle, chloréthyle, cyanométhyle, cyanoéthyle, cyanopropyle, méthoxyéthyle, éthoxyéthyle, méthoxypropyle, aminocarbonylméthyle, aminocarbonyléthyle, méthoxycarbonylméthyle, méthoxycarbonyléthyle, allyle, cyclohexyle, benzyle, phénéthyle, méthylbenzyle, chlorobenzyle, méthoxybenzyle, phényle, chlorophényle, méthylphényle, méthoxyphényle, éthoxyphényle, acétaminophényle, cyanophényle, tétraméthylènesulfon-3-yle, furfuryle, 2- ou 4-pyridylméthyle ou 2- ou 4-pyridyléthyle et R² peut aussi représenter l'hydrogène
ou
R¹ et R² représentent avec l'atome d'azote situé entre eux un groupe pyrrolidino, pipéridino, morpholino, pipérazino, méthylpipérazino, éthylpipérazino, hydroxyéthylpipérazino ou aminoéthylpipérazino,
R³ représente un groupe méthyle, éthyle, propyle, butyle, hydroxyéthylc, hydroxypropyle, hydroxybutyle, chloréthyle, cyanométhyle, cyanoéthyle, cyanopropyle, méthyléthyle, éthoxyéthyle, méthoxypropyle, aminocarbonyléthyle, méthoxycarbonyléthyle, éthoxycarbonyléthyle, allyle, benzyle, phénéthyle, méthylbenzyle, chlorbenzyle ou méthoxybenzyle,
R⁴ et R⁵ représentent indépendamment l'un de l'autre l'hydrogène, un groupe méthyle, éthyle, méthoxy, éthoxy ou le chlore,
R⁶ représente l'hydrogène, un groupe méthyle, éthyle, méthoxy, éthoxy, phénoxy, anilino, formylamino, acétylamino, propionylamino, trifluoracétylamino, benzoylamino, méthanesulfonylamino, éthanesulfonylamino, méthoxycarbonylamino, éthoxycarbonylamino, méthylaminocarbonylamino, éthylaminocarbonylamino, propylaminocarbonylamino, butylaminocarbonylamino, fluoro, chloro, bromo, cyano, méthoxycarbonyle, éthoxycarbonyle ou nitro
ou
R⁵ et R⁶ forment un pont -CH=CH-CH=CH-,
R⁷ représente l'hydrogène, un groupe méthyle, éthyle, propyle, butyle, hydroxyéthyle, hydroxypropyle, chloréthyle, cyanométhyle, cyanoéthyle, cyanopropyle, méthoxyéthyle, éthoxyéthyle, aminocarbonyléthyle, méthoxycarbonyléthyle, éthoxycarbonyléthyle, allyle, benzyle, phénéthyle, méthylbenzyle, phényle, chlorophényle, méthylphényle ou méthoxyphényle,
R⁸ et R⁹ représentent indépendamment l'un de l'autre l'hydrogène, un groupe méthyle, méthoxy ou le chlore,
Z représente -CH₂-, -CH₂CH₂-, -C(CH₃)₂-, l'oxygène, NH, SO₂, -O(CH₂)₂-O-, -NHCO-, -NHCONH-, -NHCOCH=CHCONH-, -NHSO₂-, -CONHNHCO- ou le groupe de formule (II) avec m = 5 ou le groupe de formule (III) avec Y = oxygène et
X⁻ représente un anion.

4. Colorants du 1,3,4-thiadiazole cationiques selon les revendications 1 à 3, caractérisés en ce que, dans la formule (I),
R¹ et R² représentent indépendamment l'un de l'autre un groupe méthyle, éthyle, propyle, butyle, hydroxyéthyle, hydroxypropyle, cyanoéthyle, méthoxyéthyle, éthoxyéthyle, méthoxyphényle ou acétaminophényle et R² peut aussi représenter l'hydrogène
ou
R¹ et R² représentent avec l'atome d'azote situé entre eux un groupe morpholino,
R³ représente un groupe méthyle, éthyle, hydroxyéthyle, hydroxypropyle, cyanoéthyle ou aminocarbonyléthyle,
R⁴ représente un groupe méthyle, méthoxy, éthoxy, ou le chlore,
R⁵, R⁸ et R⁹ représentent l'hydrogène,
R⁶ représente l'hydrogène, un groupe méthyle, méthoxy, formylamino, acétylamino, chloro ou cyano,
R⁷ représente l'hydrogène, un groupe méthyle, hydroxyéthyle, hydroxypropyle ou cyanoéthyle,
Z représente NH, SO₂, -NHCO-, -NHCONH- ou le groupe de fomule (III) avec Y = oxygène et
X⁻ représente un anion.

5. Colorants du 1,3,4-thiadiazole cationiques selon les revendications 1 à 4, caractérisés en ce que, dans la formule (I),
R⁷ représente l'hydrogène et
tous les autres restes ont la signification indiquée dans la revendication 4.

6. Anhydrobases de formule (IV) 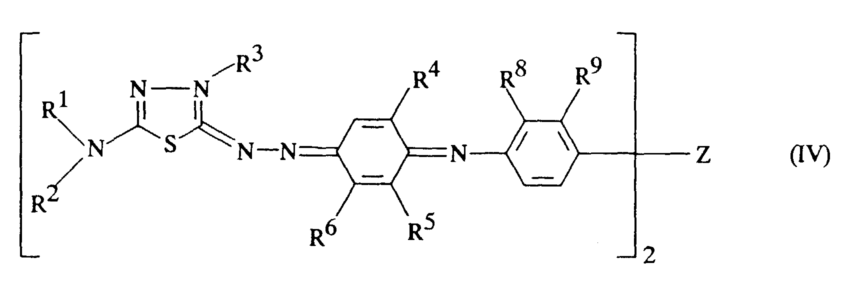 dans laquelle
R¹ à R⁶, R⁸, R⁹ et Z ont la signification indiquée dans la revendication 1.

7. Procédé de préparation de colorants du 1,3,4-thiadiazolc cationiques de la revendication 1 est caractérisé en ce que l'on couple des 2-amino-1,3,4-thiadiazoles de formule (V) 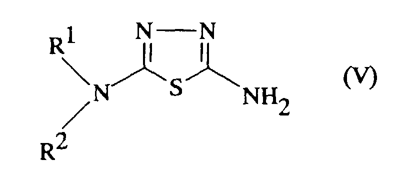 dans laquelle
R¹ et R² ont la signification indiquée dans la revendication 1 sur des dérivés de la diphénylamine de formule (VI) 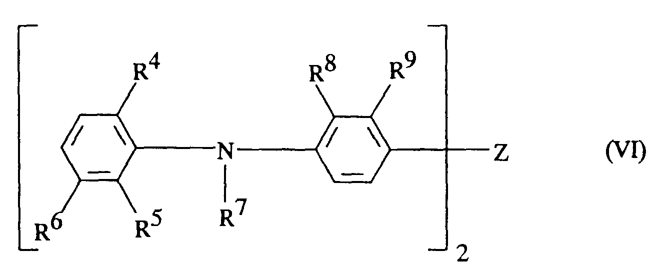
dans laquelle
R⁴ et R⁹ et Z ont la signification indiquée dans la revendication 1 puis on les quaternise avec des composés de formule (VII)
R³X (VII),
dans laquelle
R³ a la signification indiquée dans la revendication 1 et
X représente un groupe qui correspond à l'anion X^{⊖} non chargé tel qu'il est indiqué dans la revendication 1.

8. Procédé de préparation de colorants du 1,3,4-thiadiazole cationiques de la revendication 1, caractérisé en ce que l'on fait réagir des colorants de formule (VIII) 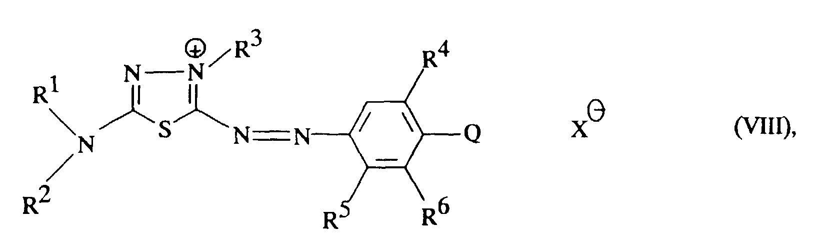 dans laquelle
R¹ à R⁶ et X ont la signification indiquée dans la revendication 1 et
Q représente un halogène, un groupe hydroxyle, alcoxy, cycloalcoxy, aryloxy, amino, mono- ou dialkylamino, acyloxy ou acylamino,
avec des amines de formule (IX) 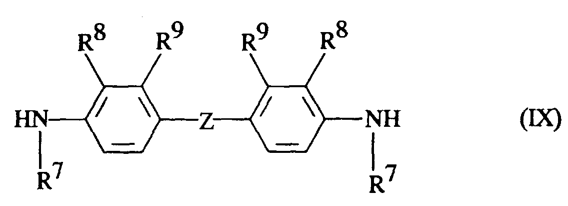 dans laquelle
R⁷ à R⁹ et Z ont la signification indiquée dans la revendication 1.

9. Utilisation de colorants du 1,3,4-thiadiazole cationiques de la revendication 1 pour la teinture et l'impression de fibres et de tissus pouvant être teints par voie cationique, de matières cellulosiques tannées, du papier, de la soie et du cuir, en particulier pour la teinture du papier et pour la teinture dans la masse du polyacrylonitrile et pour la préparation de liquides pour l'écriture, de liquides à tampons, de pâtes pour stylos à bille et d'encres pour jet d'encre ainsi que comme colorants dichroïques dans des feuilles polarisantes.

10. Fibres et tissus pouvant être teints par voie cationique, matières cellulosiques tannées, papier, soie, cuir, en particulier papier, fibres et tissus qui contiennent du polyacrylonitrile, ainsi que feuilles polarisantes, caractérisés en ce qu'ils contiennent au moins un colorant du 1,3,4-thiadiazole cationique de la revendication 1.
